# FASCICULE DE BREVET EUROPEEN

(11) **EP 0 569 283 B1**
(45) Date de publication et mention de la délivrance du brevet: **11.09.1996**
(21) Numéro de dépôt: 93401142.0
(22) Date de dépôt: 04.05.1993
(51) Int. Cl.: G01M 1/04, B23Q 11/00

(54) **Outilage d'équilibrage dynamique de porte-outils et procédé d'équilibrage**
Dynamische Auswuchtungsvorrichtung eines Werkzeughalters und Auswuchtungsverfahren
Dynamic balancing tool for tool holders and a balancing method

(30) Priorité: 07.05.1992 FR 9205662
(43) Date de publication de la demande: 10.11.1993
(73) Titulaire: RENAULT AUTOMATION, F-92109 Boulogne-Billancourt (FR)
(72) Inventeur: Assie, Jean-Paul, F-81100 Castres (FR)
(74) Mandataire: Ernst-Schonberg, Michel

(56) Documents cités:
- DE-A- 3 611 726
- US-A- 1 671 468
- US-A- 1 750 608

## Description

La présente invention a pour objet un outillage d'équilibrage dynamique perrnettant la mesure des balourds dynamiques d'un porte-outils ainsi qu'un procédé d'équilibrage d'un tel porte-outils.

Les porte-outils destinés à supporter des outils d'usinage pour machines-outils et en particulier des outils entraînés en rotation en vue d'une opération d'usinage telle que perçage, fraisage, alésage etc. doivent être correctement équilibrés pour obtenir un bon état de surface de la pièce usinée et un usinage de précision. En effet, si le porte-outils est mal équilibré il soumet le système d'entraînement en rotation à des forces d'inertie dont l'intensité est proportionnelle au carré de la vitesse de rotation. Il en résulte des vibrations de la broche, donc du porte-outils, ce qui conduit à un mauvais état de surface et à une qualité d'usinage médiocre.

Dans ces conditions, on procède habituellement à un équilibrage de ces porte-outils, de façon à supprimer ou réduire le balourd par une opération dite de débalourdage qui peut se faire par enlèvement de matière (fraisage, perçage, meulage etc.), ou par apport de matière (soudage, adjonction de masselottes à des endroits appropriés etc.).

On a déjà prévu, par exemple dans la demande de brevet français 2 237 715 (VALERON), d'intégrer dans un porte-outils un certain nombre de masses avec un faible jeu circonférentiel et radial de façon à réduire le broutage dû à de telles vibrations lors de l'usinage. Un tel dispositif n'est cependant pas comparable à un réel équilibrage. On sait également procéder à un équilibrage statique d'un porte-outils au moyen d'une machine d'équilibrage qui permet, par mesure directe sur le porte-outils lui-même, la détermination du balourd statique présent sur le porte-outils considéré.

Compte tenu de la nécessité actuelle de raccourcir dans la mesure du possible les temps d'usinage, il devient de plus en plus nécessaire de concevoir des porte-outils de forme complexe et d'augmenter notablement les vitesses de coupe, c'est-à-dire les vitesses de rotation des porte-outils. Dans ces conditions il devient indispensable de procéder à un meilleur équilibrage des porte-outils utilisés. Un équilibrage statique qui n'utilise qu'une mesure selon un plan perpendiculaire à l'axe de rotation du porte-outils n'est pas suffisant. Il convient de procéder à un équilibrage dynamique de précision, permettant de faire coïncider l'un des axes principaux d'inertie du porte-outils avec son axe de rotation. Un tel équilibrage dynamique est fait à l'aide d'une mesure selon deux plans perpendiculaires à l'axe de rotation du porte-outils de façon à réduire ou supprimer tous les balourds et donc les risques de vibrations du système d'entraînement en rotation du porte-outils.

La présente invention a pour objet de fournir un outillage spécifique, simple et ergonomique, qui puisse être aisément adapté sur une machine d'équilibrage dynamique à berceau horizontal, qui présente une grande rigidité et qui puisse en outre être aisément modifié, en fonction des caractéristiques de chaque porte-outils à équilibrer, en particulier de sa longueur, de son diamètre et du type d'attachement avec lequel il est fixé sur la machine d'usinage.

L'outillage de l'invention, permet également de procéder à l'équilibrage de deux familles de porte-outils différentes

L'outillage selon l'invention, permet en outre aisément de mesurer le balourd non seulement avant l'opération de débalourdage, mais également après débalourdage afin de contrôler le résultat obtenu.

L'outillage d'équilibrage dynamique de porte-outils d'usinage sur machines outils, selon la présente invention, est destiné à coopérer avec une machine à équilibrer. L'outillage comprend au moins deux éléments rigides allongés, assemblés par vis à deux flasques frontaux d'extrémité. Des moyens d'ajustement de position sont prévus entre l'un des flasques et au moins l'un des éléments allongés afin d'assurer la coaxialité précise des deux flasques. Ces moyens peuvent être des vis écartant plus ou moins l'un des éléments allongés du flasque correspondant. Dans un mode de réalisation préféré, ces moyens sont constitués par des cales d'épaisseur déterminée avec précision. Ces cales peuvent être aisément interchangées pour assurer de manière très précise la coaxialité recherchée. L'ensemble constitué par les éléments allongés et les flasques, définit un espace ouvert, accessible latéralement depuis l'extérieur et de dimension suffisante pour recevoir les porte-outils qui doivent faire l'objet d'un équilibrage dynamique. Au moins l'un des flasques est adapté pour la fixation d'un dispositif d'attachement du porte-outils, identique à celui de la machine-outil, sur laquelle le porte-outils est destiné à être monté ultérieurement pour l'usinage. Chaque flasque présente en outre, un tourillon axial extérieur, capable de coopérer avec des moyens de support de la machine à équilibrer qui présente avantageusement un berceau horizontal, jouant le rôle de moyens de support pour l'outillage de l'invention, ainsi que des moyens de mesure et de traitement de ces mesures en vue de l'équilibrage dynamique du porte-outils.

Dans un mode de réalisation préféré de l'invention, deux cales d'ajustement sont serrées entre l'un des flasques et au moins l'un des éléments allongés, les deux cales étant disposées de manière orthogonale l'une par rapport à l'autre de façon que par un ajustement précis de l'épaisseur de chacune de ces cales, il soit possible de modifier la position de l'axe du flasque correspondant.

Dans un mode de réalisation avantageux de l'invention, chaque flasque est adapté pour la fixation d'un dispositif d'attachement prévu pour une famille ou un type de porte-outils. De cette manière, les deux dispositifs d'attachement fixés en vis-à-vis permettent de procéder à l'équilibrage de deux familles de porte-outils différentes avec le même outillage.

Chaque dispositif d'attachement doit bien entendu être fixé de façon parfaitement coaxiale au tourillon axial extérieur du flasque correspondant.

Dans un mode de réalisation avantageux de l'invention, chaque flasque présente une forme générale carrée avec une excroissance latérale permettant l'appui de l'une des cales d'ajustement. L'autre cale d'ajustement vient s'appuyer contre le côté du flasque carré.

Chaque flasque peut en outre avantageusement comprendre des moyens de fixation pour des masselottes de débalourdage de l'outillage lui-même avant introduction du porte-outils dans le dispositif d'attachement et des masselottes d'étalonnage destinées à moduler la réponse de l'outillage et du porte-outils sur la machine d'équilibrage.

Le procédé d'équilibrage dynamique de l'invention est adapté à un porte-outils qui est destiné à être entraîné en rotation par une machine-outil en vue d'une opération d'usinage. Selon l'invention, on monte tout d'abord sur le porte-outils, un dispositif d'attachement identique à celui de la machine-outils destinée à recevoir le porte-outils. On procède à l'équilibrage dynamique de l'outillage ainsi équipé, cet équilibrage étant fait une fois pour toutes. Le porte-outils est ensuite monté dans l'outillage. Puis, on installe cet outillage équipé du porte-outils sur une machine à équilibrer et on procède à des mesures dans deux plans. On effectue enfin l'équilibrage du porte-outils par débalourdage en fonction des mesures obtenues et traitées par la machine à équilibrer, après avoir extrait le porte-outils de l'outillage.

L'invention sera mieux comprise à l'étude d'un mode de réalisation particulier pris à titre d'exemple nullement limitatif et illustré sur les dessins annexés sur lesquels :
la figure 1 est une vue schématique en coupe en élévation d'un outillage d'équilibrage dynamique selon la présente invention ; et
la figure 2 est une vue en coupe selon II-II de la figure 1.

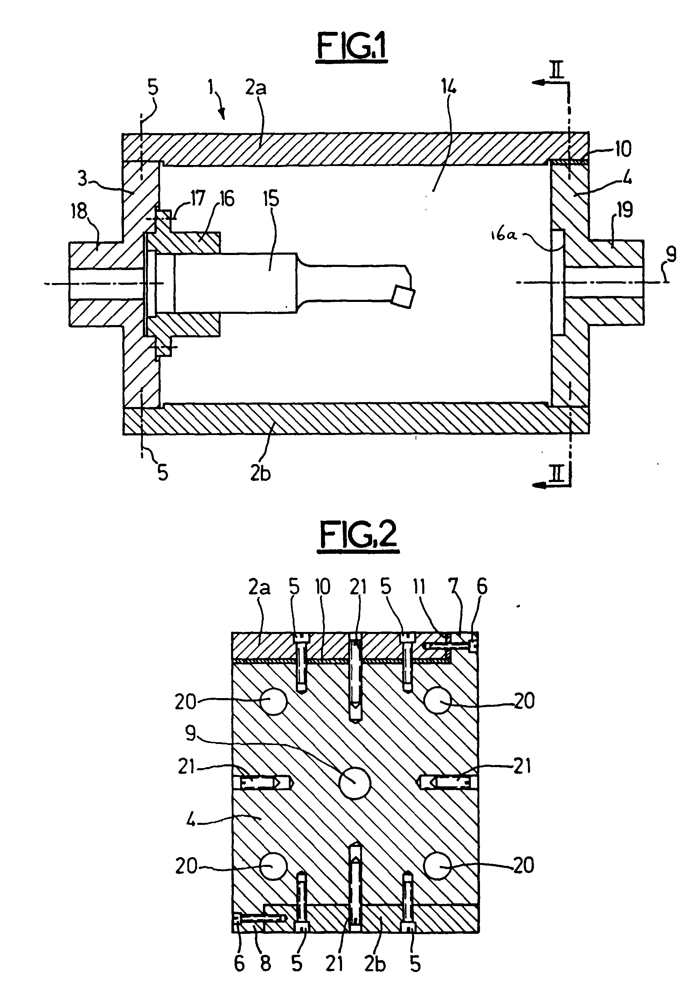

Tel qu'il est illustré sur les figures, l'outillage d'équilibrage dynamique 1 selon l'invention, comprend deux éléments rigides allongés 2a, 2b qui se présentent sous la forme de plaques rectangulaires métalliques d'épaisseur suffisante pour présenter des caractéristiques convenables de rigidité. Les deux plaques 2a et 2b sont fixées au voisinage de leurs deux extrémités à deux flasques frontaux d'extrémité 3, 4. La fixation est faite au moyen de vis de serrage 5 et 6 visibles sur la figure 2 et symbolisées par leur axe sur la figure 1.

Comme on peut le voir sur la figure 2, le flasque d'extrémité 4 présente une forme générale carrée avec une excroissance latérale 7 sur l'un des côtés, et une excroissance latérale 8 sur le côté opposé, les excroissances 7 et 8 étant diamètralement opposées c'est-à-dire selon une diagonale du carré. Dans ces conditions, on voit sur la figure 2 que les plaques 2a et 2b se trouvent décalées par rapport à l'axe de rotation 9 du flasque d'extrémité 4 et de l'ensemble de l'outillage 1.

Dans l'exemple illustré une cale d'ajustement 10 d'épaisseur déterminée avec une grande précision, a été placée entre la face principale de l'élément allongé 2a et le bord principal en regard du flasque 4, de façon à faire varier l'écartement de l'élément allongé 2a, par rapport à l'axe de rotation 9. Une deuxième cale 11 a été disposée au contraire entre le bord latéral de l'élément allongé 2a et l'excroissance 7. L'élément allongé 2a et la cale 10 sont serrés contre le flasque 4 par les vis 5 tandis que la cale 11 est serrée entre l'élément allongé 2a et l'excroissance 7 par la vis 6 dont l'axe est orthogonal à celui des vis 5. Des cales similaires, d'épaisseur différente pourraient bien entendu remplacer les cales 10 et 11 en fonction du décalage constaté entre les axes respectifs des flasques 3 et 4.

La même disposition pourrait être adoptée en ce qui concerne l'élément allongé 2b qui pourrait être serré contre le flasque 4 avec interposition d'une cale non représentée au moyen des vis 5 et d'une deuxième cale non représentée contre l'excroissance 8 au moyen de la vis 6. Dans l'exemple illustré au contraire le serrage de l'élément 2b se fait sans aucune cale.

Les différentes cales 10, 11 sont choisies en ce qui concerne leur épaisseur, qui a été très exagérée sur les figures, de façon à placer avec une très grande précision l'axe de rotation 9 du flasque 4.

Du côté opposé, les éléments allongés 2a et 2b sont simplement fixés par serrage de vis correspondantes 5 et 6 contre le flasque 3 qui présente la même forme générale que le flasque 4. Aucune cale d'ajustement n'est cependant prévue entre les éléments allongés 2a et 2b et le flasque 3. On comprend qu'il soit possible de cette manière d'assurer une parfaite coaxialité entre le flasque 3 et le flasque 4 en choisissant les cales d'épaisseur convenable en fonction des imprécisions d'usinage et des tolérances respectives des différentes pièces que constituent les flasques 3 et 4 et les éléments allongés 2a et 2b. Bien entendu d'autres moyens pourraient être utilisés pour assurer la coaxialité recherchée. Par exemple des vis pourraient permettre d'écarter plus ou moins l'élément allongé 2a par rapport au flasque 4.

L'ensemble constitué par les flasques d'extrémité 3 et 4 et les deux éléments allongés 2a et 2b, constitue comme on peut le voir sur la figure 1, un outillage rigide 1 définissant un espace 14 ouvert de chaque côté, accessible latéralement depuis l'extérieur et dont les dimensions dépendent de la longueur des éléments allongés 2a et 2b. Il est ainsi possible d'adapter les dimensions de l'espace 14 aux dimensions du porte-outils 15 qu'on cherche à équilibrer.

Le flasque d'extrémité 3 est adapté,pour permettre la fixation d'un dispositif d'attachement 16, par exemple au moyen de vis 17. Le dispositif d'attachement 16 peut recevoir le porte-outils 15 et il est très exactement identique au dispositif d'attachement prévu sur la machine-outil d'usinage sur laquelle le porte-outils 15 est destiné à être monté ultérieurement, après son équilibrage. Un autre dispositif d'attachement, adapté à une autre famille de porte-outils pourrait être fixé sur le flasque 4 à l'emplacement référencé 16a sur la figure 1, en vis-à-vis du dispositif d'attachement 16 afin d'autoriser, sur le même outillage 1, l'équilibrage de deux familles différentes de porte-outils.

Les deux flasques d'extrémité 3 et 4 présentent en outre à l'extérieur, c'est-à-dire à l'opposé de l'espace interne 14, un tourillon axial 18, 19 capable de coopérer avec des moyens de support d'une machine à équilibrer non représentée sur les figures et susceptible d'entraîner en rotation l'outillage 1 dans son ensemble. Les dispositifs d'attachement tel que le dispositif 16 sont fixés de façon parfaitement coaxiale aux touillons 18, 19.

Chacun des flasques d'extrémité 3, 4 présente en outre des moyens de fixation 20 pour des masselottes d'étalonnage ainsi que des vis d'équilibrage 21 disposées perpendiculairement les unes aux autres.

L'outillage de l'invention est utilisé de la manière suivante dans un procédé d'équilibrage dynamique d'un porte-outils tel que le porte-outils 15 illustré sur la figure 1.

On assure au préalable une parfaite coaxialité des axes de rotation des deux flasques d'extrémité 3 et 4 en serrant entre les éléments allongés 2a et 2b et le flasque 4 des cales d'épaisseur appropriée 10, 11 ou en utilisant d'autres moyens d'ajustement.

On fixe ensuite le dispositif d'attachement 16 au moyen des vis 17 sur le flasque d'extrémité 3 ainsi qu'éventuellement un autre dispositif d'attachement sur le flasque d'extrémité 4. On installe l'outillage ainsi équipé d'un ou de deux dispositifs d'attachement, sur la machine d'équilibrage et on procède à un équilibrage dynamique de l'outillage à vide c'est-à-dire sans le porte-outils 15. Cette opération est faite une fois pour toutes.

On monte ensuite le porte-outils 15 dans le dispositif d'attachement 16 ou un autre porte-outils dans l'autre dispositif d'attachement et on installe l'ensemble de l'outillage 1 ainsi muni du porte-outils 15 sur la machine d'équilibrage dynamique. On procède aux différentes mesures du balourd dynamique dans deux plans perpendiculaires à l'axe de rotation du porte-outils. Le traitement des mesures est effectué par un logiciel de type classique, dont la machine d'équilibrage est équipée, et qui, en tenant compte de la communication par l'opérateur des zones où il sera ultérieurement possible de procéder au débalourdage du porte-outils, fournit les valeurs des balourds mesurées dans les plans de débalourdage ainsi définis.

Après retrait du porte-outils 15, on procède à son débalourdage sur un poste annexe soit par enlèvement de matière soit par adjonction de matière. Ensuite, on peut encore vérifier le résultat de l'équilibrage obtenu, en montant à nouveau le porte-outils 15 dans l'outillage 1 de l'invention et en procédant à un contrôle final. Les opérations précitées, à l'exception des premières faites une fois pour toutes, sont répétées pour l'équilibrage d'autres porte-outils.

L'outillage de la présente invention permet donc d'obtenir de manière simple l'équilibrage dynamique d'un porte-outils. Les dimensions des flasques d'extrémité, qui peuvent bien entendu présenter une autre forme, par exemple une forme circulaire, au même titre que la longueur des éléments allongés jouant le rôle d'entretoises entre les deux flasques, peuvent être aisément modifiées en fonction de la taille des porte-outils à équilibrer. On notera en particulier que l'outillage de l'invention permet ainsi de procéder à des mesures de balourd sur des porte-outils de grande longueur par rapport au diamètre tels que des barres d'alésage ou analogue. La structure particulière de l'outillage selon l'invention, permet à la fois d'obtenir une excellente rigidité de cet outillage, et une parfaite accessibilité pour le montage et le démontage des porte-outils.

## Revendications

1. Outillage (1) d'équilibrage dynamique de porte-outils (15) d'usinage sur machine-outil, destiné à coopérer avec une machine à équilibrer caractérisé par le fait qu'il comprend au moins deux éléments rigides allongés (2a, 2b) assemblés par vis (5, 6) à deux flasques frontaux d'extrémité (3, 4), des moyens d'ajustement de position (10, 11) étant prévus entre l'un des flasques et au moins l'un des éléments allongés pour assurer la coaxialité précise des deux flasques (3, 4), l'ensemble constitué par les éléments allongés (2a, 2b) et les flasques (3, 4) définissant un espace ouvert (14) accessible latéralement depuis l'extérieur, de dimension suffisante pour recevoir le porte-outils (15), au moins l'un des flasques (3) étant adapté pour la fixation d'un dispositif d'attachement (16) du porte-outils (15) identique à celui de la machine-outil et chaque flasque (3, 4) présentant un tourillon axial extérieur (18, 19) capable de coopérer avec des moyens de support de la machine à équilibrer.

2. Outillage d'équilibrage dynamique selon la revendication 1, caractérisé par le fait que deux cales d'ajustement sont serrées entre l'un des flasques et au moins l'un des éléments allongés, les deux cales étant disposées de manière orthogonale l'une par rapport à l'autre.

3. Outillage d'équilibrage dynamique selon les revendications 1 ou 2, caractérisé par le fait que chaque flasque est adapté pour la fixation d'un dispositif d'attachement prévu respectivement pour un type de porte-outils.

4. Outillage d'équilibrage dynamique selon l'une quelconque des revendications précédentes, caractérisé par le fait que chaque dispositif d'attachement est fixé sur le flasque respectif coaxialement au tourillon axial extérieur.

5. Outillage d'équilibrage dynamique selon l'une quelconque des revendications précédentes, caractérisé par le fait que chaque flasque (3, 4) présente une forme générale carrée avec une excroissance latérale (7, 8) pour l'appui d'une des cales d'ajustement.

6. Outillage d'équilibrage dynamique selon l'une quelconque des revendications précédentes, caractérisé par le fait que chaque flasque (3, 4) comprend des moyens de fixation pour des masselottes de débalourdage de l'outillage avant introduction du porte-outils (15) dans le dispositif d'attachement (16) et pour des masselottes d'étalonnage.

7. Procédé d'équilibrage dynamique d'un porte-outils (15) destiné à être entraîné en rotation par une machine-outil en vue d'une opération d'usinage, caractérisé par le fait qu'on fixe sur l'outillage (1) d'équilibrage au moins un dispositif d'attachement, (16) identique à celui de la machine-outils; on procède à l'équilibrage dynamique et au débalourdage de l'outillage (1) ainsi équipé; on monte le porte-outils (15) dans son dispositif (16) d'attachement; on installe ledit outillage (1) sur une machine à équilibrer; puis on procède à l'équilibrage du porte-outils (15) par débalourdage en fonction des mesures obtenues et traitées par la machine à équilibrer, après avoir extrait le porte-outils (15) dudit outillage (1).

## Patentansprüche

1. Vorrichtung zum dynamischen Auswuchten von Bearbeitungswerkzeug-Trägern (15) an Werkzeugmaschinen, die mit einer Auswuchtmaschine zusammenwirken, dadurch gekennzeichnet, daß sie wenigstens zwei langgestreckte steife Teile (2a, 2b) aufweist, die durch Schrauben (5, 6) mit zwei stirnseitigen Endflanschen (3, 4) verbunden sind, wobei Positionieranordnungen (10, 11) zwischen einem der Flansche und wenigstens einem der langgestreckten Teile vorgesehen sind, zur genauen koaxialen Ausrichtung der beiden Flansche (3, 4) zueinander; der aus den beiden langgestreckten Teilen (2a, 2b) und den Flanschen (3, 4) bestehende Aufbau bildet einen offenen Raum (14), der seitlich von außen zugänglich ist und ausreichend bemessen ist zur Aufnahme von Werkzeugträgern (15); wenigstens einer der Flansche (3) ist zur Befestigung einer Haltevorrichtung (16) für einen Werkzeugträger (15) ausgestaltet, der identisch zu demjenigen der Werkzeugmaschine ist und jeder Flansch (3, 4) weist eine axiale Außenwelle (18, 19) auf, die mit der Traganordnung für die auszuwuchtende Maschine zusammenwirkt.

2. Vorrichtung zum dynamischen Auswuchten nach Anspruch 1, dadurch gekennzeichnet, daß zwei Einstellplatten zwischen einem der Flansche und wenigstens einem der langgestreckten Teile eingeklemmt sind, wobei die beiden Platten senkrecht zueinander angeordnet sind.

3. Vorrichtung zum dynamischen Auswuchten nach Ansprüchen 1 oder 2, dadurch gekennzeichnet, daß jeder Flansch zur Aufnahme einer Haltevorrichtung für einen bestimmten Werkzeugträger ausgestaltet ist.

4. Vorrichtung zum dynamischen Auswuchten nach einem der vorhergehenden Ansprüche, dadurch gekennzeichnet, daß jede Haltevorrichtung am entsprechenden Flansch koaxial zur axialen Außenwelle befestigt ist.

5. Vorrichtung zum dynamischen Auswuchten nach einem der vorhergehenden Ansprüche, dadurch gekennzeichnet, daß jeder Flansch (3, 4) eine im allgemeinen viereckige Form aufweist und mit einem seitlichen Vorsprung (7, 8) versehen ist, der sich auf einer der Einstellplatten abstützt.

6. Vorrichtung zum dynamischen Auswuchten nach einem der vorhergehenden Ansprüche, dadurch gekennzeichnet, daß jeder Flansch (3, 4) eine Befestigungsanordnung für Auswuchtgewichte für die Vorrichtung aufweist, vor der Aufnahme von Werkzeugträger (15) in die Haltevorrichtung (16) sowie für Justiergewichte.

7. Verfahren zum dynamischen Auswuchten von Werkzeugträgern (15), die von einer Werkzeugmaschine in Drehungen versetzt werden, im Hinblick auf einen Bearbeitungsvorgang, dadurch gekennzeichnet, daß an der Auswuchtvorrichtung (1) wenigstens eine Haltevorrichtung (16) befestigt wird, die identisch zu derjenigen der Werkzeugmaschine ist; danach wird die derart ausgerüstete Vorrichtung (1) dynamisch und statisch ausgewuchtet; der Werkzeugträger (15) wird an seiner Haltevorrichtung (16) angeordnet; die Vorrichtung (1) wird an der auszuwuchtenden Maschine befestigt; anschließend erfolgt ein Auswuchten des Werkzeugträgers (15) durch statisches Auswuchten als Funktion der erhaltenen Messungen, die von der auszuwuchtenden Maschine verarbeitet wurden, nachdem der Werkzeugträger (15) von der Vorrichtung (1) abgenommen worden ist.

## Claims

1. Apparatus (1) for dynamic balancing of machining tool holders (15) on a machine tool, intended to cooperate with a balancing machine, characterised by the fact that it comprises at least two rigid elongated elements (2a. 2b) joined by screws (5, 6) to two front end flanges (3, 4), positional adjustment means (10, 11) being provided between one of the flanges and at least one of the elongated elements to ensure the precise coaxiality of the two flanges (3, 4), the assembly constituted by the elongated elements (2a, 2b) and the flanges (3, 4) defining an open space (14) accessible laterally from the exterior, of a sufficient size to receive the tool holder (15), at least one of the flanges (3) being adapted for the fixing on of an attachment device (16) for the tool holder (15) identical to that of the machine tool and each flange (3, 4) having an axial external pin (18, 19) able to cooperate with means for supporting the balancing machine.

2. Dynamic balancing apparatus according to claim 1, characterised by the fact that two adjusting blocks are clamped between one of the flanges and at least one of the elongated elements, the two blocks being arranged in an orthogonal manner with respect to one another.

3. Dynamic balancing apparatus according to claims 1 or 2, characterised by the fact that each flange is adapted for the fixing on of an attachment device provided for one type of tool holder.

4. Dynamic balancing apparatus according to any one of the preceding claims, characterised by the fact that each attachment device is fixed on the respective flange coaxially with respect to the axial external pin.

5. Dynamic balancing apparatus according to any one of the preceding claims, characterised by the fact that each flange (3, 4) is generally of a square shape with a lateral protuberance (7, 8) for supporting one of the adjusting blocks.

6. Dynamic balancing apparatus according to any one of the preceding claims, characterised by the fact that each flange (3, 4) comprises fixing means for counterbalancing weights for the apparatus before the introduction of the tool holder (15) into the attachment device (16) and for calibration weights.

7. Method of dynamic balancing of a tool holder (15) intended to be rotary driven by a machine tool for a machining operation, characterised by the fact that at least one attachment device (16) identical to that on the machine tool is fixed onto the balancing apparatus (1); dynamic balancing and counterbalancing of the apparatus (1) equipped in this manner is carried out; the tool holder (15) is mounted in its attachment device (16); said apparatus (1) is installed on a balancing machine; then the tool holder (15) is balanced by counterbalancing according to the measurements obtained and processed by the balancing machine, after having removed the tool holder (15) from said apparatus (1).
